# EUROPÄISCHE PATENTANMELDUNG

(11) **EP 3 028 821 A1**
(43) Veröffentlichungstag der Anmeldung: **08.06.2016**
(21) Anmeldenummer: 14196019.5
(22) Anmeldetag: 03.12.2014
(51) Int. Cl.: B25D 17/24

(54) **Steuerungsverfahren für eine Handwerkzeugmaschine**

(71) Anmelder: HILTI Aktiengesellschaft, 9494 Schaan (LI)
(72) Erfinder: Cehajic, Damir, 87435 Kempten (DE); Ontl, Rainer, 86899 Landsberg (DE); Dieing, Christoph, 88316 Isny im Allgäu (DE)
(74) Vertreter: Hilti Aktiengesellschaft Corporate Intellectual Property

(57) **Zusammenfassung**

Die Handwerkzeugmaschine hat einen Werkzeughalter (**2)** zum Haltern eines Werkzeugs **(4)** auf einer Arbeitsachse **(12).** Ein Schlagwerk **(6)** hat einen mit einer Schlagzahl periodisch auf der Arbeitsachse bewegten Schläger (**15).** Eine Antriebssteuerung **(18)** des Schlagwerks **(6)** regelt die Schlagzahl auf einen Sollwert. Ein Tilger **(19)** hat einen längs der Arbeitsachse **(12)** um eine Ruhelage beweglichen Schwinger **(21)** und ein oder mehrere den Schwinger **(21)** in die Ruhelage rücktreibende Federn **(20).** Eine Kalibierphase beinhaltet folgende Schritte: Erfassen einer Beschleunigung mit dem Beschleunigungssensor **(24),** Ermitteln eines Minimums der Beschleunigung durch Variation der Schlagzahl in einem Bereich zwischen 90 % und 110 % des Sollwerts und Festlegen des Sollwerts auf die zu dem ermittelten Minimum gehörige Schlagzahl.

## Beschreibung

### GEBIET DER ERFINDUNG

Die vorliegende Erfindung betrifft ein Steuerungsverfahren für eine Handwerkzeugmaschine mit einem Tilger zum Dämpfen periodischer Schwingungen.

US8434565 BB beschreibt einen Bohrhammer, dessen Schlagwerk einen Meißel mit einer Schlagfrequenz in einen Untergrund treibt. Die mit der Schlagfrequenz auftretenden Schwingungen werden durch einen Tilger gedämpft. Der Tilger hat einen frei aufgehängten Schwinger, der aus einer Ruhelage heraus längs der Schlagrichtung vor- und zurück schwingen kann. Federn treiben den Schwinger nach einer Auslenkung in die Ruhelage zurück. Die Masse des Schwingers und die Federstärke der Federn sind auf die Schlagfrequenz abgestimmt.

### OFFENBARUNG DER ERFINDUNG

Steuerungsverfahren für eine Handwerkzeugmaschine. Die Handwerkzeugmaschine hat einen Werkzeughalter zum Haltern eines Werkzeugs auf einer Arbeitsachse. Ein Schlagwerk hat einen mit einer Schlagzahl periodisch auf der Arbeitsachse bewegten Schläger. Eine Antriebssteuerung des Schlagwerks regelt die Schlagzahl auf einen Sollwert. Ein Tilger hat einen längs der Arbeitsachse um eine Ruhelage beweglichen Schwinger und ein oder mehrere den Schwinger in die Ruhelage rücktreibende Federn. Eine Kalibierphase beinhaltet folgende Schritte: Erfassen einer Beschleunigung mit dem Beschleunigungssensor, Ermitteln eines Minimums der Beschleunigung durch Variation der Schlagzahl in einem Bereich zwischen 90 % und 110 % des Sollwerts und Festlegen des Sollwerts auf die zu dem ermittelten Minimum gehörige Schlagzahl.

### KURZE BESCHREIBUNG DER FIGUREN

Die nachfolgende Beschreibung erläutert die Erfindung anhand von exemplarischen Ausführungsformen und Figuren. In den Figuren zeigen:

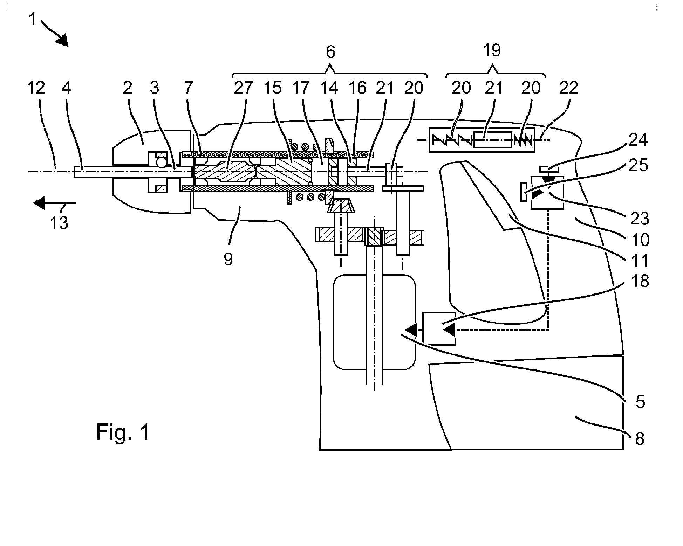

Fig. 1 einen Bohrhammer
   Gleiche oder funktionsgleiche Elemente werden durch gleiche Bezugszeichen in den Figuren indiziert, soweit nicht anders angegeben.

### AUSFÜHRUNGSFORMEN DER ERFINDUNG

Fig. 1 zeigt als Beispiel einer Handwerkzeugmaschine schematisch einen Bohrhammer **1.** Der Bohrhammer **1** hat einen Werkzeughalter **2,** in welchen ein Schaftende **3** eines Werkzeug, z.B. eines des Bohrers **4,** eingesetzt werden kann. Einen primären Antrieb des Bohrhammers **1** bildet ein Motor **5,** welcher ein Schlagwerk **6** und eine Abtriebswelle **7** antreibt. Ein Batteriepaket **8** oder eine Netzleitung versorgt den Motor **5** mit Strom. Das pneumatische Schlagwerk **6** und vorzugsweise die weiteren Antriebskomponenten sind innerhalb eines Maschinengehäuses **9** angeordnet. Ein Anwender kann den Bohrhammer **1** mittels eines Handgriffs **10** führen, welcher an dem Maschinengehäuse **9** befestigt ist. Der Motor **5** und damit der Bohrhammer **1** können mittels eines Systemschalters **11** in Betrieb genommen werden. Im Betrieb dreht der Bohrhammer **1** den Bohrer **4** kontinuierlich um eine Arbeitsachse **12** und kann dabei den Bohrer **4** in Schlagrichtung **13** längs der Arbeitsachse **12** in einen Untergrund schlagen.

Das pneumatische Schlagwerk **6** hat einen Erreger **14** und einen Schläger **15,** die in einem Führungsrohr **16** längs der Arbeitsachse **12** beweglich geführt sind. Der Erreger **14** und der Schläger **15** schließen zwischen sich eine pneumatische Kammer **17** ab. Der Erreger **14** wird von dem Motor **5** periodisch auf der Arbeitsachse **12** vor- und zurückbewegt. Die pneumatische Kammer **17** bildet eine Luftfeder, welche den Schläger **15** an die Bewegung des Erregers **14** anbindet. Die Periodendauer ist durch die erzwungene Bewegung des Erregers **14** vorgeben. Eine Motorsteuerung **18** regelt die Drehzahl des Motors **5** auf einen Sollwert. Die Drehzahl gibt die Periodendauer vor. Der Sollwert der Drehzahl ist in Hinblick auf eine effiziente pneumatische Kopplung des Schlägers **15** an den Erreger **14** ausgelegt. Die Schlagzahl des Schlagwerks **6** ist das Inverse der Periodendauer und liegt typischerweise im Bereich zwischen 10 Hz und 100 Hz.

Die periodischen Bewegungen des Erregers **14** und des Schlägers **15** prägen Vibrationen in das Maschinengehäuse **9** ein, welche sich auf den Handgriff **10** übertragen. Der Anwender spürt insbesondere die Beschleunigung des Schlägers **15** im Kompressionspunkt.

Ein Tilger **19** in dem Maschinengehäuse **9** verringert die Amplitude der Vibrationen. Der Tilger **19** hat einen an einer oder mehreren Federn **20** aufgehängten Schwinger **21.** Die Trägheit des Schwingers **21** bewirkt eine relative Bewegung des Schwingers **21** gegenüber dem vibrierenden Maschinengehäuse **9.** Die periodischen Vibrationen des Schlagwerks **6** längs der Arbeitsachse **12** führen zu einer periodischen Auslenkung des Schwingers **21** relativ zu einer Ruhelage in dem Maschinengehäuse **9.** Nur die Federn **20** koppeln den Schwinger **21** an das Maschinengehäuse **9** bzw. Handgriff **10** an und üben auf den Schwinger **21** bei einer Auslenkung eine in die Ruhelage rückstellende Kraft aus. Der Schwinger **21** oszilliert zwischen einem werkzeugnahen Umkehrpunkt und einem werkzeugfernen Umkehrpunkt. Die Periodizität ist gleich der Schlagfrequenz der periodischen Anregung. Die Amplitude der Auslenkung ist abhängig von der Amplitude der Vibrationen und der Schlagfrequenz.

Der beispielhafte Tilger **19** hat einen in einem Linearlager längs einer Achse **22** geführten Schwinger **21.** Die Achse **22** ist parallel oder um weniger als 30 Grad gegenüber der Arbeitsachse **12** geneigt. Die Federn **20** sind beispielsweise Schraubenfedern mit denen der Schwinger **21** sich längs der Achse **22** an dem Maschinengehäuse **9** abstützt. Ein alternativer Tilger hat einen auf einer gebogenen Bahn geführten Schwinger. Der Schwinger ist über einen Pendelarm an dem Maschinengehäuse **9** aufgehängt. Der Pendelarm ist eine Biegefeder, die senkrecht zu der Arbeitsachse angeordnet ist.

Der schwingende Tilger **19** bewirkt eine Reduktion der auf den Handgriff **10** übertragengen Vibrationen. Die Reduktion erfolgt nicht durch eine dissipative Wirkung des Tilgers **19.** Vielmehr bildet der Tilger **19** mit dem Schlagwerk **6** ein zusammenhängendes schwingendes System mit einem Schwingungsknoten. Das System ist so abgestimmt, dass der Anbindungspunkts des Systems an das Maschinengehäuse **9** bzw. den Handgriff **10** mit dem Schwingungsknoten zusammenfällt. Die optimale Reduktion wird erreicht, wenn die Schlagfrequenz gleich der Eigenfrequenz des Tilgers **19** ist. Die Eigenfrequenz ist die Frequenz mit welcher der Tilger **19** nach einmaliger Auslenkung ohne weitere Anregung schwingt. Die Eigenfrequenz ist durch die Masse des Schwingers **21** und die Steifigkeit der Federn **20** vorgeben. Die Eigenfrequenz kann sich über die Lebensdauer ändern, insbesondere ändert sich die effektive Steifigkeit der Federn **20.**

Der Tilger **19** hat eine Dämpfregelung **23,** welche die Drehzahl des Motors **5** verändert, um die Reduktion der Vibrationen durch den Tilger **19** zu optimieren. Die Dämpfregelung **23** hat einen Beschleunigungssensor **24,** der Beschleunigungen oder Vibrationen an dem Handgriff **10** oder dem Maschinengehäuse **9** längs der Arbeitsachse **12** erfasst. Die Dämpfregelung **23** passt während einer Kalibrierungsphase die Drehzahl des Motors **5** an den Tilger **19** an.

Die beispielhafte Dämpfregelung **23** hat einen Datenspeicher **25,** in welchem ein zuletzt bestimmter Sollwert für die Schlagzahl des Schlagwerks **6** oder Solldrehzahl des Motors **5** abgelegt ist. Der Sollwert entspricht vorzugsweise der Eigenfrequenz des Tilgers **19** oder ist knapp darunter, z.B. zwischen 90 % und 100 % der Eigenfrequenz, vorzugsweise zwischen 95 % und 100 % der Eigenfrequenz. Bei einem Neugerät kann eine den Spezifikationen des Tilgers **19** vorgegebene Eigenfrequenz Sollwert in dem Datenspeicher **25** abgelegt sein. Der Sollwert für die Schlagzahl und die Solldrehzahl des Motors **5** unterscheiden sich nur durch einen festen durch eine Getriebeuntersetzung vorgegebenen Faktor.

Der Motor **5** wird beim Einschalten des Bohrhammers **1** z.B. durch Betätigen des Systemschalters **11** auf den Sollwert beschleunigt. Die Dämpfregelung **23** kann die Kalibrierung unmittelbar nach dem Einschalten durchführen.

Eine beispielhafte Kalibrierung sieht vor, die Drehzahl des Bohrhammers **1** schrittweise oder kontinuierlich gegenüber der Solldrehzahl zu verringern. Die Dämpfregelung **23** erfasst während dem Verringern der Drehzahl die Amplitude der von dem Beschleunigungssensor **24** erfassten Beschleunigung. Die Vibrationen ändern sich aufgrund des Schlagwerks **6** und des Tilgers **19.** Das Schlagwerk **6** bildet die Quelle für die Vibrationen. Eine verringerte Leistung des Schlagwerks **6** bedingt entsprechend weniger Vibrationen. Allerdings ist ein beliebiges Absenken nicht erwünscht, sondern das Schlagwerk **6** soll bei maximaler Schlagleistung und geringen Vibrationen betrieben werden. Es erweist sich, dass die stark frequenzabhängige Wirkung des Tilgers **19** für eine Anpassung des Tilgers **19** genutzt werden kann. Die Drehzahl wird soweit reduziert, bis aufgrund der nachlassenden Wirkung des Tilgers **19** die Vibrationen wieder zunehmen. Das Absenken der Drehzahl wird beendet. Die Drehzahl, bei welcher sich das Minimum der Vibrationen eingestellt hat, wird neuer Sollwert in dem Datenspeicher **25** abgelegt. Die Kalibrierung ist beendet. Die Drehzahl des Motors **5** wird auf den neuen Sollwert ausgeregelt.

Das Absenken der Drehzahl wird gestoppt, wenn eine minimale Drehzahl unterschritten wurde, ohne dass sich ein lokales Minimum der Vibrationen einstellt. Die minimale Drehzahl liegt beispielsweise bei 90 % des Sollwerts. Ein weiteres Absenken der Drehzahl erweist sich ungünstig. Die Kalibrierung erhöht die Drehzahl ausgehend von dem Sollwert. Das Schlagwerk **6** erzeugt typischerweise mit ansteigender Drehzahl mehr Vibrationen. Die Wirkung des Tilgers **19** dominiert typischerweise das Vibrationsverhalten. Die Drehzahl wird solange erhöht, bis ein Abfall der Vibrationen und ein nachfolgender Anstieg der Vibrationen erfasst werden. Die Drehzahl bei dem ermittelten Minimum wird neuer Sollwert abgelegt.

Die Kalibrierung ist beendet. Das Erhöhen der Drehzahl wird abgebrochen, falls die Drehzahl eine maximale Drehzahl überschreitet. Die maximale Drehzahl liegt bei 110 % des Sollwerts.

## Patentansprüche

1. Steuerungsverfahren für eine Handwerkzeugmaschine mit:
einem Maschinengehäuse (9),
einem an dem Maschinengehäuse (9) befestigten Handgriff (10) zum Führen der Handwerkzeugmaschine während des Betriebs,
einem Werkzeughalter (2) zum Haltern eines Werkzeugs (4) auf einer Arbeitsachse,
einem Schlagwerk (6), das einen mit einer Schlagzahl periodisch auf der Arbeitsachse (12) bewegten Schläger (15) aufweist,
einer Antriebssteuerung (18) des Schlagwerks (6), die die Schlagzahl auf einen Sollwert regelt,
einem Tilger (19), der einen längs der Arbeitsachse (12) um eine Ruhelage beweglichen Schwinger (21) und ein oder mehrere den Schwinger (21) in die Ruhelage rücktreibende Federn (20) aufweist,
einem an einem Maschinengehäuse (9) angebrachten Beschleunigungssensor (24) zum Erfassen von Beschleunigungen längs der Arbeitsachse (12),
mit einer die Schritte enthaltenden Kalibierphase:
Erfassen einer Beschleunigung mit dem Beschleunigungssensor (24),
Ermitteln eines Minimums der Beschleunigung durch Variation der Schlagzahl in einem Bereich zwischen 90 % und 110 % des Sollwerts,
Festlegen des Sollwerts auf die zu dem ermittelten Minimum gehörige Schlagzahl und Antreiben des Schlagwerks (6) mit der auf den Sollwert geregelten Schlagzahl.
